# EUROPÄISCHE PATENTANMELDUNG

(11) **EP 2 492 838 A1**
(43) Veröffentlichungstag der Anmeldung: **29.08.2012**
(21) Anmeldenummer: 12156321.7
(22) Anmeldetag: 21.02.2012
(51) Int. Cl.: G06F 21/20

(54) **Verfahren zum Schutz vor maschinengenerierten Zugriffen auf eine zu schützende Resource einer Rechnereinheit**

(30) Priorität: 25.02.2011 DE 102011012471
(71) Anmelder: qintecs GmbH, 94501 Beutelsbach (DE)
(72) Erfinder: Kühnel, Martin, 93161 Sinzing (DE)
(74) Vertreter: Graf Glück Habersack Kritzenberger

(57) **Zusammenfassung**

Die Erfindung betrifft ein Verfahren zum Schutz vor automatisiertem Zugriff zumindest einer ersten Rechnereinheit (1) auf zumindest eine geschützte Ressource einer zweiten Rechnereinheit (2), die über eine Datenkommunikationsverbindung (4.1) mit der ersten Rechnereinheit (1) in Verbindung steht. Die Erfindung zeichnet sich insbesondere dadurch aus, dass auf einer Anzeigeeinheit (5) der ersten Rechnereinheit (1) eine Phrase (6) bestehend aus Wörtern und/oder Symbolen mit einem Phrasensinngehalt und zumindest ein Symbolauswahlbereich (7, 7', 7") mit mehreren grafischen Symbolen (S) angezeigt wird, dass zumindest teilweise grafische Symbole (S) angezeigt werden, denen ein menschlicher Benutzer einen Symbolsinngehalt zuordnet und dass der Zugang zu der geschützten Ressource der zweiten Rechnereinheit (2) nach korrektem Nachbilden des Phrasensinngehalts durch Auswählen von grafischen Symbolen (S) aus dem Symbolauswahlbereich (7, 7', 7") mit entsprechendem Symbolsinngehalt erfolgt.

## Beschreibung

Die Erfindung betrifft ein Verfahren zum Schutz vor maschinengenerierten Zugriffen auf eine zu schützende Ressource einer Rechnereinheit gemäß dem Oberbegriff des Patentanspruchs 1.

Aus dem Stand der Technik sind bereits Verfahren zum Schutz vor maschinengenerierten Zugriffen auf zu schützende Ressourcen einer Rechnereinheit bekannt. Insbesondere sind sogenannte CAPTCHA-Verfahren bekannt, die eine Unterscheidung zwischen Zugriffen von menschlichen Benutzern und Zugriffen von Maschinen bzw. programmgesteuerten Rechnereinheiten ermöglichen. Derartige Rechnereinheiten sind vorzugsweise Teil eines Datenkommunikationsnetzwerkes, welche über Kommunikationsverbindungen miteinander verbindbar sind.

Derartige CAPTCHA-Verfahren werden beispielsweise bei internetbasierten Diensten, beispielsweise zur Verfügung gestellten Datenbanken und diverse Softwareanwendungen dazu eingesetzt, einen maschinengenerierten Missbrauch dieser Dienste zu vermeiden. Das Verfahren besteht hierbei im Wesentlichen aus einer oder mehreren Aufgabenstellungen, die vor dem Zugriff auf die zu schützende Ressource, beispielsweise den internetbasierten Dienst, gelöst werden müssen, und zwar mittels einer vom Benutzer der Ressource erzeugten Benutzerinteraktion. Im Falle der korrekt gelösten Aufgabenstellung oder den korrekt gelösten Aufgabenstellungen wird davon ausgegangen, dass die Eingabe von einem menschlichen Benutzer stammt. Bei falscher Lösung der Aufgabenstellung wird der Zugriff auf die zu schützende Ressource verweigert, da von einem maschinengenerierten Zugriffsversuch einer programmgesteuerten Rechnereinheit ausgegangen wird.

Bisher bekannt gewordene CAPTCHA-Verfahren beruhen auf sogenannten Bild-CAPTCHA-Verfahren, bei denen ein Text oder eine Zeichenfolge in Form eines Bildes dargestellt wird. Dieser Text bzw. die Zeichenfolge werden vor der Darstellung modifiziert, um deren Lesbarkeit zu erschweren. Dies erfolgt beispielsweise durch einen verzerrend wirkenden Bildfilter und/oder einen dem Text oder der Zeichenfolge überlagerten Bild- oder Zeichenhintergrund. Die vom Benutzer zu lösende Aufgabe besteht hierbei darin, aus dem Bild die Buchstaben bzw. Zahlen zu erkennen und diese über Tastatureingaben in ein vorgegebenes Textfeld zu übertragen.

Nachteilig am aufgezeigten Stand der Technik ist, dass programmgesteuerte Rechnereinheiten zunehmend in der Lage sind, auch durch Bildfilter verzerrte oder schwer leserliche Zeichenfolgen mittels OCR-Erkennung ("Optical Character Recognition") aus dem Bild zu extrahieren und damit die Aufgabenstellung richtig zu lösen. Um einen ausreichenden Schutz gegen automatisierten Missbrauch zu gewährleisten, ist es daher notwendig, die Zeichenfolgen zunehmend stärker zu verzerren bzw. zu verfälschen. Dadurch wird die Erkennbarkeit der Zeichenfolge und damit die Lösbarkeit der Aufgabenstellung auch für einen menschlichen Benutzer zunehmend erschwert, sodass die Nutzerfreundlichkeit des bekannten Verfahrens dramatisch abnimmt.

Ausgehend hiervon ist es Aufgabe der Erfindung, ein Verfahren zum Schutz vor maschinengenerierten Zugriffen auf eine zu schützende Ressource einer Rechnereinheit anzugeben, das zum einen eine hohe Sicherheit gegen automatisierten Missbrauch der zu schützenden Ressource bietet, zum anderen von menschlichen Benutzern leicht bedient werden kann und damit eine hohe Benutzerfreundlichkeit aufweist. Die Aufgabe wird ausgehend vom Oberbegriff des Patentanspruches 1 durch dessen kennzeichnende Merkmale gelöst.

Der wesentliche Aspekt des erfindungsgemäßen Verfahrens zum Schutz vor maschinengenerierten Zugriffen auf eine zu schützende Ressource ist darin zu sehen, dass auf der Anzeigeeinheit eine Phrase bestehend aus Wörtern und/oder Symbolen mit einem vorgegebenen Phrasensinngehalt angezeigt wird, dass auf der Anzeigeeinheit zusätzlich mehrere grafische Symbole angezeigt werden, wobei zumindest ein Teil der angezeigten grafischen Symbole einen durch einen menschlichen Benutzer zuordenbaren Symbolsinngehalt aufweisen. Ferner werden zum Zugriff auf die zu schützende Ressource durch den Benutzer der ersten Rechnereinheit grafische Symbole ausgewählt und der angezeigten Phrase zugeordnet, wobei die vom Benutzer ausgewählten und zugeordneten grafischen Symbole dahingehend ausgewertet werden, ob eine Übereinstimmung des Symbolsinngehaltes der ausgewählten grafischen Symbole mit dem Phrasensinngehalt der angezeigten Phrase vorliegt. Bei übereinstimmenden Sinngehalten wird der Zugriff auf die zu schützende Ressource der zweiten Rechnereinheit freigegeben. Das erfindungsgemäße Verfahren macht sich hierbei zu nutze, dass es für heutige programmgesteuerte Rechnereinheiten eine sehr große Herausforderung darstellt, eine Phrase bestehend aus Texten und/oder Symbolen syntaktisch und semantisch korrekt zu erfassen und dessen Phrasensinngehalt automatisiert zu erkennen. Selbst bei einfachen Phrasen, die beispielsweise nur aus einem Text bestehen, ist es heute nicht möglich, den Sinngehalt dieses Textes automatisiert zu erfassen und mit dem Sinngehalt korrelierende Ausgaben zu erzeugen. Für menschliche Benutzer hingegen ist es sehr einfach, den Sinngehalt einer Phrase, insbesondere eines Textes zu erkennen und diesem den Sinngehalt wiedergebende grafische Symbole zu zuordnen, sodass sich eine hohe Schutzwirkung des erfindungsgemäßen Verfahrens gegen automatisierten Missbrauch bei gleichzeitig hoher Nutzerfreundlichkeit ergibt.

Weiterhin vorteilhaft wird eine Phrase durch die Kombination zumindest dreier Phrasenteile, insbesondere Wörter und/oder Symbole gebildet, die zur Erzeugung des Phrasensinngehaltes in einer vorgegebenen Reihenfolge nacheinander angezeigt werden. Durch die drei Phrasenteile wird somit beispielsweise ein Satz bestehend aus Subjekt, Prädikat und Objekt erzeugt, wobei der erste Phrasenteil das Subjekt, der zweite Phrasenteil das Prädikat und der dritte Phrasenteil das Objekt vorgeben. Der Phrasensinngehalt wird durch den Sinngehalt des Satzes bestehend aus Subjekt, Prädikat und Objekt erzeugt, wobei der Phrasensinngehalt von dem Wortsinngehalt der Wörter und/oder dem Symbolsinngehalt der Symbole sowie deren Reihenfolge abhängig ist. Die Übereinstimmung des Wortsinngehaltes der Wörter und/oder dem Symbolsinngehalt der Symbole der Phrase sowie deren Reihenfolge mit dem Symbolsinngehalt der ausgewählten grafischen Symbole sowie deren Auswahlreihenfolge werden besonders vorteilhaft verglichen und abhängig davon der Zugriff auf die geschützte Ressource der zweiten Rechnereinheit freigegeben. Somit muss der Nutzer, der Zugriff zu der geschützten Ressource erhalten will, reihenfolgerichtig beispielsweise jeweils zu einem Wort der Phrase ein grafisches Symbol mit einem dem Wortsinngehalt entsprechenden Symbolsinngehalt auswählen. Die Anzahl und Reihenfolge der Wörter bzw. Symbole der Phrase entspricht hierbei der Anzahl und Reihenfolge der vom Benutzer auszuwählenden grafischen Symbole. Dadurch wird die Nutzerfreundlichkeit weiterhin verbessert, da dem Benutzer die Anzahl von auszuwählenden Symbolen bereits vorgegeben wird. Durch die Verwendung von drei Phrasenteilen werden einfache Sätze bestehend aus Subjekt, Prädikat und Objekt erzeugt, die eine klare Strukturierung aufweisen und damit durch reihenfolgerichtiges Auswählen von Symbolen aus dem Symbolauswahlbereich bzw. aus mehreren Symbolauswahlbereichen einfach nachbildbar sind. Ferner bietet die Verwendung eines Satzes aus einem Subjekt, einem Prädikat und einem Objekt den entscheidenden Vorteil, dass der Satz durch die Verwendung von zwei unterschiedlichen Symbolauswahlbereichen, nämlich einem Symbolauswahlbereich zur Auswahl des Subjekts und des Objekts, im Folgenden Subjekt-Objekt-Symbolauswahlbereich genannt, und einem Symbolauswahlbereich zur Auswahl des Prädikats, im Folgenden Prädikat-Symbolauswahlbereich genannt, wiedergeben werden kann. Der Subjekt-Objekt-Symbolauswahlbereich enthält vorzugsweise Symbole zur Nachbildungvon Substantiven und der Prädikat-Symbolauswahlbereich Symbole zur Nachbildung von Verben. Damit kann beispielsweise zur Nachbildung eines Satzes aus einem Subjekt, einem Prädikat und einem Objekt zunächst zur Auswahl des Subjekts der Subjekt-Objekt-Symbolauswahlbereich, anschließend der Prädikat-Auswahlbereich zur Auswahl des Prädikats des Satzes und abschließend wiederum der Subjekt-Objekt-Auswahlbereich zur Selektierung des Objekts des Satzes angezeigt werden. Abweichend hiervon ist es auch möglich, dass sämtliche Wörter der Phrase aus einem einzigen Symbolauswahlbereich auszuwählen sind, d.h. der Symbolauswahlbereich enthält Symbole zur Nachbildung von Substantiven und Verben. Alternativ kann jedoch auch ein Phrasenteil aus mehreren Wörtern und/oder Symbolen bestehen, welche für sich genommen einen Phrasensinngehalt ergeben, dem zumindest ein Symbol aus dem Symbolauswahlbereich zuordenbar ist, d.h. die Anzahl der Wörter und die Anzahl der zuordenbaren Symbole können voneinander abweichen. Ggf. kann zusätzlich zur Anzeige der Phrase die Anzeige eines Hinweistextes zur Benutzerführung vorgesehen sein.

In einem weiteren bevorzugten Ausführungsbeispiel wird den einzelnen Wörtern und /oder Symbolen der Phrase jeweils ein grafisches Symbol zugeordnet. Hierbei enthält der Symbolauswahlbereich genau ein grafisches Symbol, das zur Nachbildung des Wortsinngehalts des Wortes oder des Symbolsinngehalt des Symbols geeignet ist. Dadurch wird eine Eindeutigkeit der Auswahlmöglichkeiten erreicht.

Ferner ist den einzelnen Wörtern und/oder Symbolen der Phrase eindeutig eine Symbolkennung zugeordnet. Über die Symbolkennung lassen sich Wörter und Symbole, die einen gleichen Sinngehalt aufweisen, miteinander korrelieren.

In einem bevorzugten Ausführungsbeispiel wird in Abhängigkeit von der jeweiligen Phrase zumindest ein Symbolauswahlbereich erzeugt, der jeweils ein grafisches Symbol mit einem Symbolsinngehalt gleich dem Wortsinngehalt eines Wortes der Phrase oder gleich dem Symbolsinngehalt eines Symbols der Phrase sowie weitere grafische Symbole, die anderen Symbolsinngehalt aufweisen, enthält. Dadurch ergibt sich eine Vergrößerung des Lösungsraums, sodass es nahezu unmöglich ist, lediglich durch eine Auswahl willkürlicher Art die korrekte Lösung zufällig zu erhalten.

Für den Fall, dass die Phrase graphische Symbole enthält weisen das grafische Symbol der Phrase und das auszuwählende grafische Symbol des zumindest einen Symbolauswahlbereichs zwar gleichen Symbolsinngehalt auf, sind jedoch grafisch unterschiedlich. Dadurch wird vermieden, dass die Lösung der Aufgabenstellung zumindest teilweise durch einfachen Vergleich der Grafikdaten ermittelt werden kann.

Bevorzugt werden zur Nachbildung der einzelnen Wörter der Phrase zumindest teilweise unterschiedliche Symbolauswahlbereiche angezeigt. Somit können beispielsweise zwei Symbolauswahlbereiche vorgesehen werden, wobei ein erster Symbolauswahlbereich zur Nachbildung von Substantiven und ein zweiter Symbolauswahlbereich zur Nachbildung von Verben ausgebildet ist. Durch die Trennung in unterschiedliche Symbolauswahlbereiche kann der menschliche Benutzer die Symbole, die den jeweiligen Wörtern gemäß ihrem Sinngehalt zugeordnet werden müssen, leichter im Symbolauswahlbereich erkennen, sodass die Benutzerfreundlichkeit weiter erhöht wird.

In einem besonders bevorzugten Ausführungsbeispiel werden zumindest teilweise die für das Zugriffsverfahren benötigten Daten von einer dritten Rechnereinheit an die zweite Rechnereinheit über eine Datenkommunikationsverbindung übertragen. Die zumindest eine dritte Rechnereinheit dient hierbei als zentrale Rechnereinheit, die den zweiten Rechnereinheiten, auf denen geschützte Ressourcen angeboten werden sollen, sämtliche oder zumindest einen Teil der Daten zur Generierung und Durchführung des erfindungsgemäßen Zugriffverfahrens zur Verfügung stellt und vorzugsweise auch die Auswertung der Lösung der Aufgabenstellung, d.h. die Bewertung, ob die Aufgabe korrekt gelöst wurde, übernimmt. Damit wird eine große Verfügbarkeit des erfindungsgemäßen Zugriffsverfahrens ohne die Notwendigkeit der Bereitstellung von großen Systemressourcen auf den zweiten Rechnereinheiten erreicht.

In einem weiteren bevorzugten Ausführungsbeispiel werden in der dritten Rechnereinheit mehrere einen Phrasensinngehalt bildende Phrasen gespeichert. Durch die Speicherung von einen Phrasensinngehalt bildenden Phrasen können diese zur Generierung einer Aufgabe herangezogen werden.

Weiterhin bevorzugt wird in der dritten Rechnereinheit zumindest eine Symbolliste gespeichert, in der den jeweiligen Symbol kennungen jeweils zumindest ein grafisches Symbol und zumindest ein Wort zugeordnet sind und der Symbolsinngehalt des grafischen Symbols gleich dem Wortsinngehalt des Wortes ist. Mittels der Symbolliste können mehrere, einen identischen Wortsinngehalt aufweisende Symbolbezeichnungen bzw. mehrere einen identischen Symbolsinngehalt aufweisende Symbole einer Symbolkennung zugewiesen werden und damit eine Vielzahl von Symbolen und Symbolbezeichnungen gruppiert bzw. kategorisiert werden.

In einem weiteren bevorzugten Ausführungsbeispiel werden die einen Phrasensinngehalt aufweisenden Phrasen in einer Phrasenliste durch die Zuordnung und Gruppierung von mehreren Symbolkennungen gespeichert. Die Bildung der anzuzeigenden Phrase erfolgt dann durch Auslesen der dieser Phrase zugewiesenen Symbolkennungen aus der Phrasenliste, dem Auswählen jeweils eines Wortes und/oder Symbols zu jeder Symbolkennung gemäß der Symbolliste und der Kombination der Wörter und/oder Symbole zu einer Phrase.

In einem bevorzugten Ausführungsbeispiel werden den Wörtern und/oder Symbolen der angezeigten Phrase eindeutige Kennungen zugeordnet und in der dritten Rechnereinheit zumindest teilweise temporär abgespeichert. Die Überprüfung der Richtigkeit der Auswahl der grafischen Symbole aus dem zumindest einen Symbolauswahlbereich kann dann in der dritten Rechnereinheit durch einen Vergleich der Kennungen der ausgewählten Wörter und/oder Symbole mit den temporär abgespeicherten Kennungen erfolgen.

In einem besonders bevorzugten Ausführungsbeispiel werden die Symbole zumindest teilweise durch Werbeträger, insbesondere durch interaktive Werbeträger gebildet. Dadurch ist es dem Anbieter des CAPTCHA-Verfahrens möglich, den Dienst kostenfrei anzubieten, da die Finanzierung über Werbeeinnahmen durch Dritte, die Werbeträger als Symbole innerhalb des CAPTCHA-Verfahrens platzieren, sichergestellt wird.

Die Erfindung soll nachfolgend anhand von Ausführungsbeispielen im Zusammenhang mit den Figuren näher erläutert werden. Zudem ergeben sich Weiterbildungen, Vorteile und Anwendungsmöglichkeiten der Erfindung auch aus der nachfolgenden Beschreibung der Ausführungsbeispiele und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht. Es wird aber ausdrücklich darauf hingewiesen, dass die Erfindung keinesfalls auf die angegebenen Beispiele beschränkt sein soll. Es zeigen
- Fig. 1: beispielhaft ein Datenkommunikationsnetz mit ersten, zweiten und dritten Rechnereinheiten in einer schematischen Darstellung;
- Fig. 2: beispielhaft ein schematisches Ablaufdiagramm eines CAPTCHA-Verfahrens;
- Fig. 3a: beispielhaft eine schematische Darstellung einer Anzeigeneinheit mit Phrase und Symbolauswahlbereich;
- Fig. 3b: beispielhaft nebeneinander die aufeinander folgenden grafischen Darstellungen jeweils einer Phrase und eines Symbolauswahlbereichs auf einer Anzeigeeinheit zur Durchführung des erfindungsgemäßen Verfahrens;
- Fig. 4: beispielhaft eine Liste zur Verwendung in einem Verfahren gemäß der Erfindung;
- Fig. 5: beispielhaft eine Symbolliste zur Verwendung in einem Verfahren gemäß der Erfindung;
- Fig. 6: beispielhaft ein Auszug aus einer Phrasenliste zur Verwendung in einem Verfahren gemäß der Erfindung;
- Fig. 7: beispielhaft ein Ablaufdiagramm zur Erzeugung einer an die erste Rechnereinheit zu übertragenden Datenstruktur;
- Fig. 8: beispielhaft ein Ablaufdiagramm zur Generierung einer vom Benutzer zu lösenden Aufgabe;
- Fig. 9: beispielhaft ein Ablaufdiagramm zur Veranschaulichung der Abläufe zur Lösung der Aufgabenstellung.

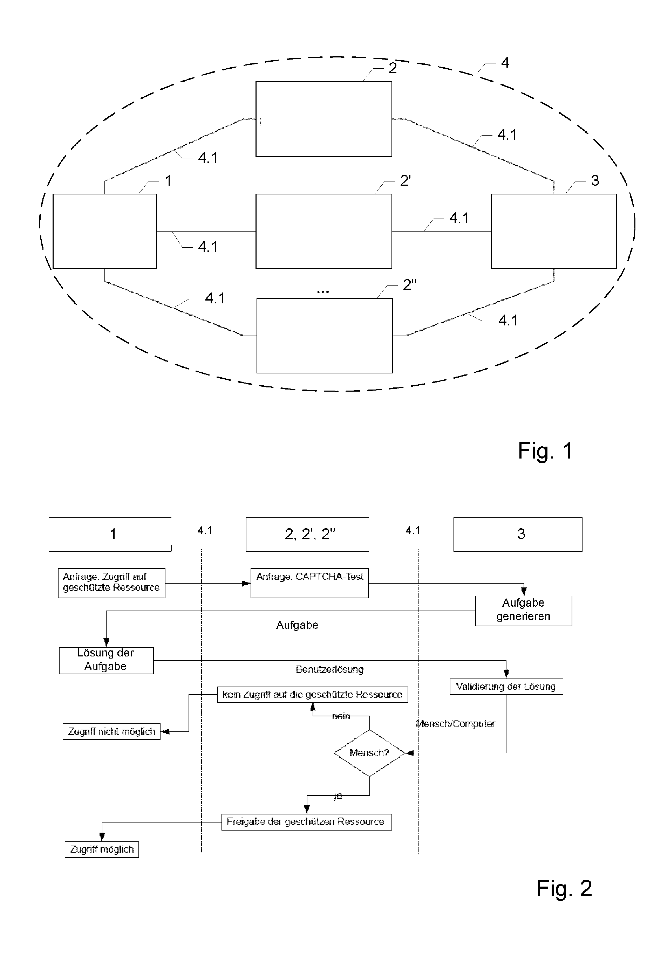

In Figur 1 ist beispielhaft in einem schematischen Blockschaltbild ein Datenkommunikationsnetzwerk 4 mit mehreren Rechnereinheiten 1, 2, 2', 2", 3 dargestellt, wobei die einzelnen Rechnereinheiten untereinander durch Datenkommunikationsverbindungen 4.1 zum Austausch von Daten verbunden sind.

Die erste Rechnereinheit 1 ist hierbei beispielsweise eine Benutzerrechnereinheit mit einer Anzeigeeinheit 5 und zumindest einer in den Zeichnungen nicht dargestellten Eingabeeinheit ausgebildet. Die Anzeigeeinheit 5 ist beispielsweise in Form eines Monitors oder Display realisiert, wohingegen beispielsweise eine Tastatur oder eine berührungsempfindliche Anzeigeinheit die Eingabeeinheit bilden können. Mit dieser ersten Rechnereinheit 1 sind im gezeigten Ausführungsbeispiel zweite Rechnereinheiten 2, 2', 2" über Datenkommunikationsverbindungen 4.1 verbunden.

Die zweiten Rechnereinheiten 2, 2', 2" bieten jeweils im Datenkommunikationsnetzwerk 4, das beispielsweise das Internet ist, unterschiedliche Ressourcen, beispielsweise in Form von Softwareapplikationen, Datenbanken oder Webdiensten an, die zwar grundsätzlich für menschliche Benutzer der ersten Rechnereinheiten 1 frei verfügbar sein sollen, jedoch vor automatisierten Zugriffen von ersten Rechnereinheiten 1 und damit vor einem automatisierten Missbrauch der Ressourcen geschützt werden sollen. Derartige Ressourcen werden nachfolgend als geschützte Ressourcen bezeichnet.

Der Ablauf eines Zugriffs auf eine durch ein Zugriffsverfahren geschützte Ressource auf einer zweiten Rechnereinheit 2, 2', 2" soll zunächst anhand des in Figur 2 dargestellten schematischen Ablaufdiagramms näher erläutert werden.

Von der ersten Rechnereinheit 1 wird eine Anfrage auf Zugriff einer geschützten Ressource an die zweite Rechnereinheit 2, 2', 2" übermittelt. Diese sendet daraufhin über die Datenkommunikationsverbindung 4.1 eine Anforderung zur Erstellung einer Aufgabe an die dritte Rechnereinheit 3. Alternativ kann die Anfrage auf Zugriff auf eine geschützte Ressource direkt an die dritte Rechnereinheit 3 übermittelt werden.

Die Aufgabe wird anschließend von der dritten Rechnereinheit 3 über die zweite Rechnereinheit 2, 2', 2" an die erste Rechnereinheit 1 verschickt und dort zur Anzeige gebracht. Auch hier kann in einer alternativen Realisierungsvariante die Aufgabe direkt von der dritten Rechnereinheit 3 an die erste Rechnereinheit 1 übertragen werden.

Der Benutzer an der ersten Rechnereinheit 1 wird durch Anzeige einer entsprechenden Benutzeraufforderungen auf der Anzeigeeinheit 5 aufgefordert, durch Benutzerinteraktion mittels der Eingabeeinheit, beispielsweise durch Benutzereingaben mit einer Maus oder an einem berührungsempfindlichen Display die Aufgabe zu lösen. Diese Benutzerlösung wird anschließend über die zweite Rechnereinheit 2, 2', 2" an die dritte Rechnereinheit 3 übertragen, die die Prüfung der Benutzerlösung, d.h. die Bewertung der vom Benutzer eingegebenen Lösung der Aufgabe als richtig oder falsch vornimmt. Das Ergebnis der Prüfung wird anschließend der zweiten Rechnereinheit 2, 2', 2" mitgeteilt. Im Falle einer richtigen Lösung der Aufgabe wird dem Benutzer der Zugriff auf die zu schützende Ressource ermöglicht, anderenfalls wird der Zugriff verweigert.

Erfindungsgemäß wird vorgeschlagen, dass auf der Anzeigeeinheit 5 der ersten Rechnereinheit 1 eine Phrase 6 bestehend aus Wörtern und/oder Symbolen mit einem Phrasensinngehalt und mehreren grafischen Symbolen S angezeigt werden, welche vorzugsweise zumindest einem Symbolauswahlbereich 7, 7', 7" zugeordnet sind.

Eine Phrase 6 wird beispielsweise durch die Kombination mehrerer Phrasenteile 6.1, 6.2, 6.3 gebildet, wobei ein Phrasenteil 6.1, 6.2, 6.3 zumindest ein Wort und/oder Symbol umfasst. Zur Erzeugung eines Phrasensinngehaltes werden die Phrasenteile 6.1, 6.2, 6.3 in einer vorgegebenen Reihenfolge nacheinander auf der Anzeigeeinheit 5 angezeigt, wobei durch die Phrasentei le 6.1, 6.2, 6.3 beispielsweise ein Satz zumindest bestehend aus Subjekt, Prädikat und Objekt erzeugt wird. Beispielsweise kann durch einen Phrasenteil 6.1, 6.2, 6.3 ein Subjekt, ein Prädikat oder ein Objekt oder eine Kombination aus einem Subjekt und einem Prädikat oder eine Kombination aus einem Prädikat und einem Objekt gebildet sein.

Der Phrasensinngehalt entspricht hierbei dem Sinngehalt des durch die Phrasenteile 6.1 bis 6.3 gebildeten Satzes, wobei der Phrasensinngehalt von dem Wortsinngehalt der Wörter und/oder dem Symbolsinngehalt der Symbole, welche die Phrase 6 bilden, sowie deren Reihenfolge der Anordnung zueinander abhängig ist. Im vorliegenden Ausführungsbeispiel besteht die Phrase 6 beispielsweise aus drei Phrasenteilen 6.1, 6.2, 6.3, wobei ein Phrasenteil 6.1, 6.2, 6.3 durch ein Wort gebildet ist, und zwar der erste Phrasenteil 6.1 durch das Wort "Sally", der zweite Phrasenteil 6.2 durch das Wort "liebt" und der dritte Phrasenteil 6.3 durch das Wort "Bob". In der korrekten Reihenfolge entsteht damit der Satz "Sally liebt Bob".

Die im Symbolauswahlbereich 7, 7', 7" dargestellten grafischen Symbole S weisen zumindest teilweise einen durch einen menschlicher Benutzer zuordenbaren Symbolsinngehalt auf. Zum Zugriff auf die zu schützende Ressource werden durch den Benutzer der ersten Rechnereinheit 1 im Symbolauswahlbereich 7, 7', 7" angezeigte grafische Symbole S ausgewählt und der angezeigten Phrase 6 zugeordnet, wobei jeweils einem Phrasenteil 6.1, 6.2, 6.3 ein grafisches Symbol S in der durch den Phrasensinngehalt vorgegebenen Reihenfolge zugeordnet wird. Die vom Benutzer ausgewählten und zugeordneten grafischen Symbole S werden schließlich dahingehend ausgewertet, ob eine Übereinstimmung des Symbolsinngehaltes der ausgewählten grafischen Symbole S mit dem Phrasensinngehalt der angezeigten Phrase 6 vorliegt. Bei übereinstimmenden Sinngehalten wird dann der Zugriff auf die geschützte Ressource der zweiten Rechnereinheit 2 freigegeben.

Der wesentliche Vorteil des erfindungsgemäßen Verfahrens besteht nun darin, dass es für menschliche Benutzer in der Regel sehr einfach ist, insbesondere aus Texten bestehenden Phrasen 6 mit ihrem Phrasensinngehalt syntaktisch und semantisch korrekt zu erfassen, wohingegen es für programmgesteuerte Rechnereinheiten bislang nicht möglich ist den Sinngehalt auch von einfachen Phrasen, Texten oder Sätzen automatisiert zu erfassen und adäquate Ausgaben hierzu zu erzeugen. Somit kann mit dem erfindungsgemäßen Verfahren mit einer sehr hohen Wahrscheinlichkeit ein menschlicher Benutzer von automatisierten Zugriffen einer Rechnereinheit unterschieden werden.

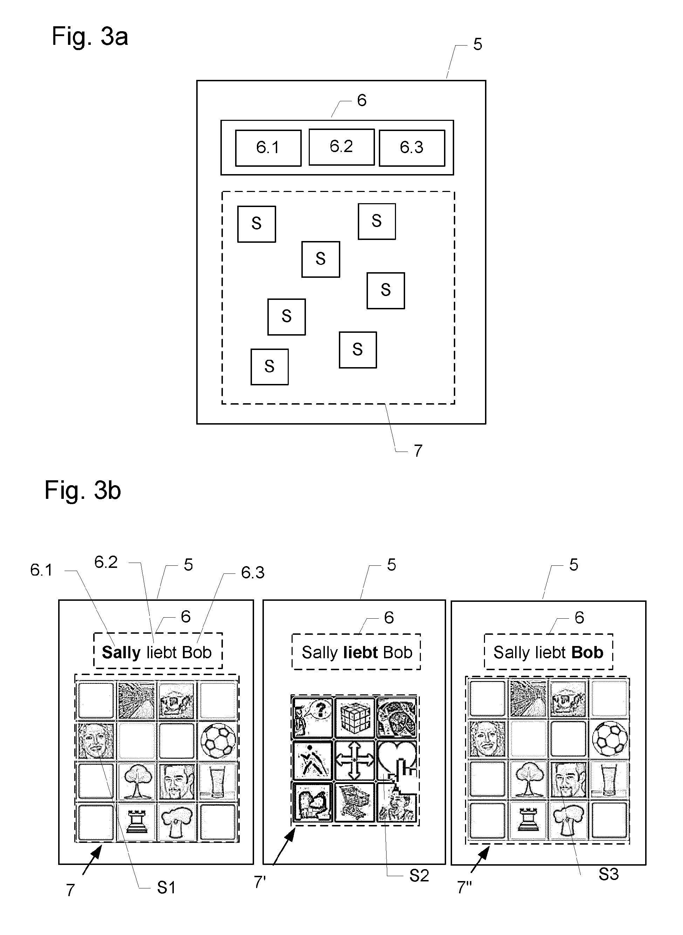

In Figur 3 sind beispielhaft nebeneinander die Darstellungen auf einer Anzeigeeinheit 5 einer ersten Rechnereinheit 1 zur Anwendung des erfindungsgemäßen Verfahrens gezeigt. Es ist jedoch auch denkbar, bei größeren Anzeigeeinheiten 5 die in Figur 3 gezeigte Gesamtdarstellung auf der Anzeigeeinheit 5 gleichzeitig anzuzeigen.

Der Benutzer wird durch die Einzeige der Phrase 6 auf der Eingabeeinheit aufgefordert, diese durch eine reihenfolgenrichtige Auswahl von semantisch korrekten Symbolen S aus dem Symbolauswahlbereiches 7 nachzubilden. Im gezeigten Ausführungsbeispiel besteht die vom Benutzer zu lösende Aufgabenstellung darin, die Phrase 6 in Form des ersten bis dritten Phrasenteils 6.1 bis 6.3 durch Zuordnung von entsprechenden Symbolen S des Symbolauswahlbereiches 7 semantisch korrekt nachzubilden. Beispielsweise ist der erste Phrasenteil 6.1 durch das Wort "Sally", der zweite Phrasenteil 6.2 durch das Wort "liebt" und der dritte Phrasenteil 6.3 durch das Wort "Bob" gebildet, so dass sich in dieser Reihenfolge der syntaktisch korrekte Satz "Sally liebt Bob" ergibt. Der erste Phrasenteil 6.1 bildet damit das Subjekt, der zweite Phrasenteil 6.3 das Prädikat und der dritte Phrasenteil 6.3 das Objekt des Satzes "Sally liebt Bob" aus.

Um nun einen Zugriff auf die geschützte Ressource zu erhalten hat der Benutzer den Satz "Sally liebt Bob" dem Phrasen- bzw. Textsinngehalt entsprechend mittels den im Symbolauswahlbereich 7 angezeigten Symbolen S nachzubilden. Ein dem ersten Phrasenteil 6.1 im Hinblick auf den Phrasen- bzw. Textsinngehalt entsprechendes erstes Symbol S1 ist beispielsweise die Darstellung eines Frauenkopfes innerhalb des Symbolauswahlbereiches 7. Die weiteren im Symbolauswahlbereich 7 aufgeführten Symbole S weisen keinen semantischen Bezug zum Subjekt "Sally" auf. Dies wird durch einen menschlichen Benutzer unmittelbar erkannt und damit ohne weiteres eine korrekte Zuordnung ausgeführt. Auch kann ein Phrasenteil 6.1, 6.2, 6.3 beispielsweise durch ein Symbol oder eine Kombination aus einem Wort und einem Symbol gebildet sein, wobei die im Symbolauswahlbereich 7 dargestellten Symbole S unterschiedlich zu dem Symbol des Phrasenteils 6.1, 6.2, 6.3 zu wählen sind.

Durch beispielsweise Anklicken, Verschieben oder einer dergleichen Manipulation des auszuwählenden Symbols S des Symbolauswahlbereich 7 erfolgt eine Zuordnung des ausgewählten Symbols S zum ersten Phrasenteil 6.1, welche durch die Rechnereinheit 1 erfasst wird. Hierzu finden übliche Eingabetechniken Anwendung, wie diese hinlänglich aus dem Stand der Technik bekannt sind. Beispielsweise kann mittels einer Maus ein Kursor auf das Symbol S geführt werden oder eine Berührung eines berührungssensitiven Displays an der Stelle erfolgen, an der das mit dem Wortsinngehalt des Wortes übereinstimmende Symbol S angezeigt wird. Für den Fall, dass das Wort "Sally" durch ein eine Frau darstellendes Symbol ersetzt ist, ist der Benutzer aufgefordert, ein ebenfalls eine Frau darstellendes Symbol S im Symbolauswahlbereich 7 auszuwählen, wobei die grafischen Darstellungen des Frauenkopfes unterschiedlich zueinander gewählt sind.

Nach erfolgter Zuordnung des ersten Symbols S zum ersten Phrasenteil 6.1 wird im nächsten Schritt der Benutzer zur Zuordnung eines zweiten Symbols S2 des Symbolauswahlbereiches 7 zum zweiten Phrasenteil 6.2 aufgefordert. Im vorliegenden Ausführungsbeispiel ist das zweite Wort des Satzes "Sally liebt Bob", und zwar das Wort "liebt" als Prädikat des Satzes durch Anwählen eines Symbols S, dessen Symbolsinngehalt mit dem Wortsinngehalt des Wortes "liebt" übereinstimmt, auszuwählen. Im gezeigten Ausführungsbeispiel ist hierzu ein weiterer Symbolauswahlbereich 7' vorgesehen, der dem Benutzer angezeigt wird und der im Vergleich zum Symbolauswahlbereich 7 unterschiedliche Symbole S zur sinngemäßen Nachbildung des Wortes "liebt" enthält.

Der weitere Symbolauswahlbereich 7' kann hierbei nicht nur grafisch unterschiedliche Symbole S im Vergleich zum Symbolauswahlbereich 7 sondern auch beispielsweise eine unterschiedliche Anzahl von Symbolen S aufweisen. Im gezeigten Ausführungsbeispiel ist der Symbolauswahlbereich 7 matrixartig mit vier Zeilen und vier Spalten aufgebaut, wohingegen der weitere Symbolauswahlbereich 7' eine Matrix mit drei Zeilen bzw. drei Spalten umfasst. Beispielhaft weist der weitere Symbolauswahlbereich 7' ausschließlich Symbole S auf, deren Symbolsinngehalt zur Nachbildung von Prädikaten mit dem Wortsinngehalt eines Verbs geeignet sind. Beispiele hierzu sind Prädikate wie "fragen", "fahren", "winken", "lieben", "einkaufen", "essen", etc.

Abweichend vom gezeigten Ausführungsbeispiel ist es aber auch möglich, dass im Symbolauswahlbereich 7 sowohl Symbole S zur Nachbildung von Subjekten bzw. Objekten als auch Symbole S zur Nachbildung von Prädikaten bzw. Verben enthalten sind. Bei einem derartigen Symbolauswahlbereich 7 mit "gemischten" Symbolen S ist es nach der jeweiligen Benutzereingabe, d.h. dem Anklicken oder dem Berühren der jeweiligen Symbole nicht erforderlich, einen weiteren Symbolauswahlbereich 7', 7" zur Anzeige zu bringen, d.h. es wird lediglich ein Symbolauswahlbereich 7 zur Nachbildung der einzelnen Phrasenteile 6.1 bis 6.3 durch entsprechende Auswahl von Symbolen S zur Anzeige gebracht.

Im vorliegenden Fall besteht eine semantische Übereinstimmung zwischen dem im weiteren Symbolauswahlbereich 7' aufgenommen und eine Herzdarstellung betreffenden zweiten Symbol S2 und dem den zweiten Phrasenteil 6.2 bildenden Wort "liebt", so dass eine entsprechende Auswahl des zweiten Symbols S2 durch den Benutzer und damit initiierte Zuordnung des zweiten Symbols S2 "Herz" zum zweiten Phrasenteil 6.2 zu einer Übereinstimmung des Phrasensinngehaltes des zweiten Phrasenteils 6.2 und des Symbolsinngehaltes des ausgewählten zweiten Symbols S2 führt.

Nach dem Auswählen des zweiten Symbols S2 "Herz" zur Nachbildung des Prädikates "liebt" wird im gezeigten Ausführungsbeispiel ein weiterer Symbolauswahlbereich 7" zur Anzeige gebracht. Der Benutzer ist nunmehr aufgefordert, das dem durch das Wort "Bob" gebildeten dritten Phrasenteil 6.3 ein drittes Symbol S3 zuzuordnen. Hierzu ist aus dem weiterer Symbolauswahlbereich 7" ein drittes Symbol S3 auszuwählen, dessen Symbolsinngehalt dem Wortsinngehalt des dritten Phrasenteils 6.3 entspricht. Im gezeigten Ausführungsbeispiel erfolgt dies durch Auswählen eines eine männliche Person, insbesondere dessen Kopf, darstellenden dritten Symbols S3. Damit ist auch der dritte und letzte Phrasenteil 6.2 korrekt zugeordnet, so dass aufgrund der bestehenden Übereinstimmungen eine Freigabe der geschützten Ressource erfolgen kann.

Im gezeigten Ausführungsbeispiel entspricht der weitere Symbolauswahlbereich 7" dem Symbolauswahlbereich 7, der zur Auswahl bzw. Nachbildung des Wortes "Sally" vorgesehen ist, d.h. der Symbolauswahlbereich 7 und der weitere Symbolauswahlbereich 7" stimmen überein. Somit stellt der Symbolauswahlbereich 7 sowohl Symbole S zur Nachbildung eines Subjekts als auch eines Objekts zur Verfügung.

In den Symbolauswahlbereichen 7, 7', 7" sind neben den semantisch korrekten Symbolen S1 bis S3 eine Vielzahl weiterer Symbole S vorgesehen, welche im Hinblick auf die Phrasenteile 6.1, 6.2, 6.3 keine sinnvolle Korrelation durch einen menschlichen Benutzer zulassen. Ausgehend von der in Figur 3 dargestellten Phrase 6 "Sally liebt Bob" ergibt beispielsweise die Auswahl von Symbolen S in Form eines "Baums", "Einkaufwagens" oder "Bierglases" einen Symbolsinngehalt "Baum kauft Bier", der keinesfalls mit dem Phrasensinngehalt in Übereinstimmung gebracht werden könnte.

Um den Phrasensinngehalt semantisch korrekt nachzubilden, ist auch darüber hinaus eine reihenfolgerichtige Zuordnung der ausgewählten Symbole S erforderlich, und zwar im vorliegenden Ausführungsbeispiel in der durch den ersten bis dritten Phrasenteile vorgegebene Reihenfolge, in der die Wörter "Sally", "liebt" und "Bob" mit entsprechendem Wortsinngehalt in der Phrase 6 hintereinander angezeigt werden.

Weiterhin bevorzugt weisen die Symbolauswahlbereiche 7, 7', 7" mehrere Symbolpositionen auf, an denen Symbole S platzierbar sind. Den jeweils im Symbolauswahlbereiche 7, 7', 7' aufgenommen Symbolen S sind jeweils Grafikdaten zugeordnet, wobei die Symbole S vorzugsweise jeweils unterschiedliche Grafikdaten aufweisen, d.h. kein Symbol S identisch ist mit einem weiteren Symbol S innerhalb der Symbolauswahlbereiche 7, 7', 7". Besonders bevorzugt besteht der Symbolauswahlbereich 7, 7', 7" aus Symbolen S, die durch einen menschlichen Benutzer visuell leicht unterscheidbar sind.

In einem bevorzugten Ausführungsbeispiel weist der Symbolauswahlbereich 7 eine matrixförmige Struktur bestehend aus Zeilen und Spalten auf, wobei an den jeweiligen Schnittpunkten der Zeilen und Spalten eine Symbol position zur Anordnung jeweils eines Symbols S gebildet ist. Neben den für die korrekte Lösung der Aufgabenstellung notwendigen Symbole S1, S2, S3 sind im Symbolauswahlbereich 7, 7', 7" weitere sogenannte "Dummy-Symbole" angeordnet, deren Auswahl zu einer falschen Zuordnung führen würde. Durch Einfügen dieser "Dummy-Symbole" wird der zur Lösung der Zuordnungsaufgabe zur Verfügung stehende Lösungsraum erweitert und damit ein sicheres Zugriffsverfahren zur Unterscheidung menschlicher Benutzer von programmgesteuerten Rechnereinheiten geschaffen.

In einem bevorzugten Ausführungsbeispiel sind die Symbole S bzw. die Phrase 6 derart gewählt, dass durch die Symbole S Gegenstände bzw. Handlungen dargestellt bzw. durch die Worte der Phrase 6 bezeichnet werden, die zum Allgemeinwissen der adressierten menschlichen Benutzer gerechnet werden können. Ferner ist es aber mit dem erfindungsgemäßen Verfahren auch möglich nicht nur eine Unterscheidung von menschlichen Benutzern und programmgesteuerten Rechnereinheiten vorzunehmen, sondern durch geeignete Bereitstellung von Phrasen 6 bzw. Symbolen S Personengruppen voneinander unterscheiden zu können, beispielsweise Personen mit speziellem Fach- oder Geheimwissen von solchen Personen, die derartiges Wissen nicht besitzen.

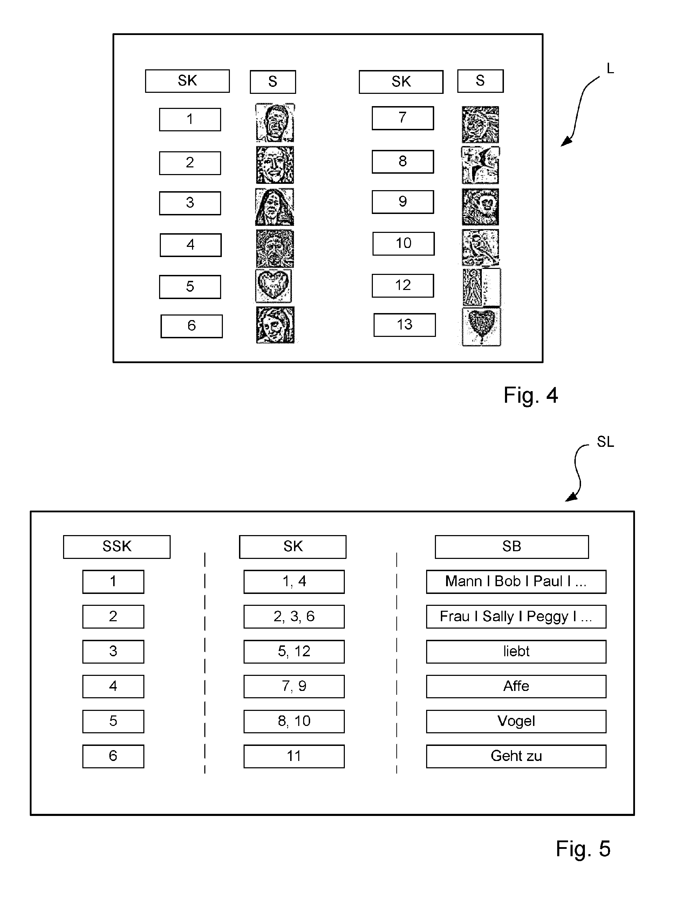

Im Folgenden wird der für die Realisierung des erfindungsgemäßen Zugriffsverfahrens erforderliche Lösungsraum und die davon abgeleitete Datensätze sowie deren Aufbau und Struktur beispielhaft anhand der Figuren 4 - 6 näher beschrieben.

Die Bereitstellung der den Lösungsraumes bildenden Datensätze werden beispielsweise im Kommunikationsnetz 4 durch die dritte Rechnereinheit 3 bereitgestellt, wobei diese beispielsweise durch eine zentrale Servereinheit gebildet sein kann. Die zur Ausführung des Zugriffsverfahrens erforderlichen Datensätze können damit von der dritten Rechnereinheit 3 über das Datenkommunikationsnetzwerk 4 geladen werden.

Zur eindeutigen Kennzeichnung der einzelnen Symbole S im Lösungsraum wird eine Symbolkennung SK vorgesehen, wobei jeweils genau eine Symbolkennung SK einem Symbol S, und zwar beispielsweise dessen Grafikdatensatz zugeordnet wird.

In Figur 4 sind beispielsweise mehrere in Spalten angeordnete Symbole S in Form von Grafiken dargestellt, welche für sich genommen jeweils ein Symbol S bilden. Jede dieser Grafiken ist genau eine Symbolkennung SK zugeordnet, welche im vorliegenden Ausführungsbeispiel durch eine fortlaufende Ziffer gebildet ist. So ist beispielsweise in Figur 4 dem einen ersten Männerkopf zeigenden Symbol S die Symbolkennung SK=1 1 und dem einen ersten Frauenkopf zeigenden Symbol S die Symbolkennung SK=2 zugeordnet. Das einen zweiten Frauenkopf zeigende Symbol S weist die Symbolkennung SK=3, das einen zweiten Männerkopf zeigende Symbol S die Symbolkennung SK=4 und das die Abbildung eines Herzens zeigende Symbol S die Symbolkennung SK=5 auf. Analog hierzu weist eine weitere Abbildung eines Frauenkopfes darstellen Symbol S die Symbolkennung SK=6 auf, das die Abbildung eines ersten Affen zeigende Symbol S die Symbolkennung SK=7, das die Abbildung eines Vogels zeigende Symbol S die Symbolkennung S=8, das die Abbildung eines zweiten Affen zeigende Symbol S die Symbolkennung SK=8 auf. Die weiteren Symbolkennungen sind analog hierzu den dargestellten Symbolen S zugeordnet.

Zur Kennzeichnung von Symbolen mit übereinstimmenden Symbolsinngehalt wird den Symbolen S jeweils eine Symbolsinnkennung SSK zugeordnet, wobei mehrere Symbole S denselben Symbolsinngehalt aufweisen können. Ferner werden jeweils einem Symbolsinngehalt bzw. der zugehörigen Symbolsinnkennung SSK zumindest eine Symbolbezeichnung SB zugeordnet, welche beispielsweise durch Wörter, und zwar Substantive, Verben oder Objekte oder einer semantisch sinnvollen Kombination aus derartigen Wörtern gebildet sein.

Wie in Figur 5 gezeigt wird beispielsweise eine Symbolliste SL erzeugt, in welcher jeweils einer Symbolsinnkennung SSK, zumindest eine Symbolkennung SK und zumindest eine Symbolbezeichnung SB zugeordnet sind. Ein derartiger Datensatz bildet einen Listeneintrag aus. Hierbei können einer Symbolsinnkennung SSK beispielsweise mehrere Symbolkennungen SK bzw. Symbolbezeichnungen SB zugeordnet sein, wobei die Zuordnung eindeutig ist.

Die in Figur 5 gezeigte Symbolliste SL enthält beispielsweise Symbolbezeichnungen SB in Form von Substantiven, die Bestandteil einer Phrase 6 und/oder eines Phrasenteils 6.1, 6.2, 6.3 sein können. Beispielsweise können diese zur Verwendung als Subjekt oder Objekt eines Satzes Verwendung finden. Die Symbolliste SL umfasst ferner als Symbolbezeichnungen SB Verben, die das Prädikat eines Satzes bilden können. Im vorliegenden Ausführungsbeispiel ist beispielsweise den Symbolsinnkennungen SSK=3 und SSK=6 ein durch ein Verb gebildete Symbol bezeichnung SB zugeordnet.

Im vorliegenden Ausführungsbeispiel gemäß Figur 5 sind beispielsweise der Symbolsinnkennung SK=1 die Symbolkennung SK=1 und SK=4 sowie die Symbolbezeichnungen SB= "Mann", SB= "Bob", SB= "Paul" und ggf. weitere Männernamen zugeordnet. Damit werden die genannten Symbolbezeichnungen SB und die Symbolkennungen SK eindeutig mit der jeweiligen Symbolsinnkennung SSK verknüpft.

Zum Aufbau eines Symbolauswahlbereichs 7 bzw. der darin aufgenommenen Symbole S kann beispielsweise eine derartige Symbolliste SL Verwendung finden, in dem sowohl Subjekte bzw. Objekte repräsentierende Symbole S, als auch Prädikate repräsentierende Symbole S im Symbolauswahlbereichs 7 angezeigt werden. Für den Fall, dass den unterschiedlichen Phrasenteilen 6.1, 6.2, 6.3 mehrere Symbolauswahlbereiche 7, 7" zugeordnet werden, so können beispielsweise vom jeweiligen Phrasensinngehalt abhängige Symbole S in den zugehörigen Symbolauswahlbereiche 7, 7" aufgenommen werden. Im Fall des vorliegenden Ausführungsbeispiels kann zumindest ein zur Auswahl eines Subjekts oder Objekts vorgesehener Symbolauswahlbereich 7, 7" und ein zur Auswahl eines Prädikats vorgesehener Symbolauswahlbereich 7' bereitgestellt werden, wobei hierzu beispielsweise getrennte Symbollisten SL für Subjekte bzw. Objekte und Prädikate in der dritten Rechnereinheit 3 vorgesehen werden können. Beispielsweise kann eine Subjekt-Objekt-Symbolliste, die lediglich Symbolbezeichnungen SB bzw. diesen Symbolbezeichnungen SB zugeordnete Symbolkennungen SK zur Bezeichnung bzw. Darstellung von Subjekten und Objekten enthält und eine Prädikat-Symbolliste, die ausschließlich Symbolbezeichnungen SB und Symbolkennungen SK zur Bezeichnung und Darstellung von Prädikaten umfasst.

Des Weiteren wird vorzugsweise in der dritten Rechnereinheit 3 eine weitere Liste L gespeichert und bereitgestellt, in der jeweils einer Symbolkennung SK eindeutig ein Symbol S zugewiesen ist. Durch eine Kombination der Symbolliste SL mit der Liste L sind beispielsweise der Symbolbezeichnung SB = "Affe" über die Symbolkennung SK= 7 und SK=9 zwei jeweils einen Affen darstellende Symbole S zugeordnet.

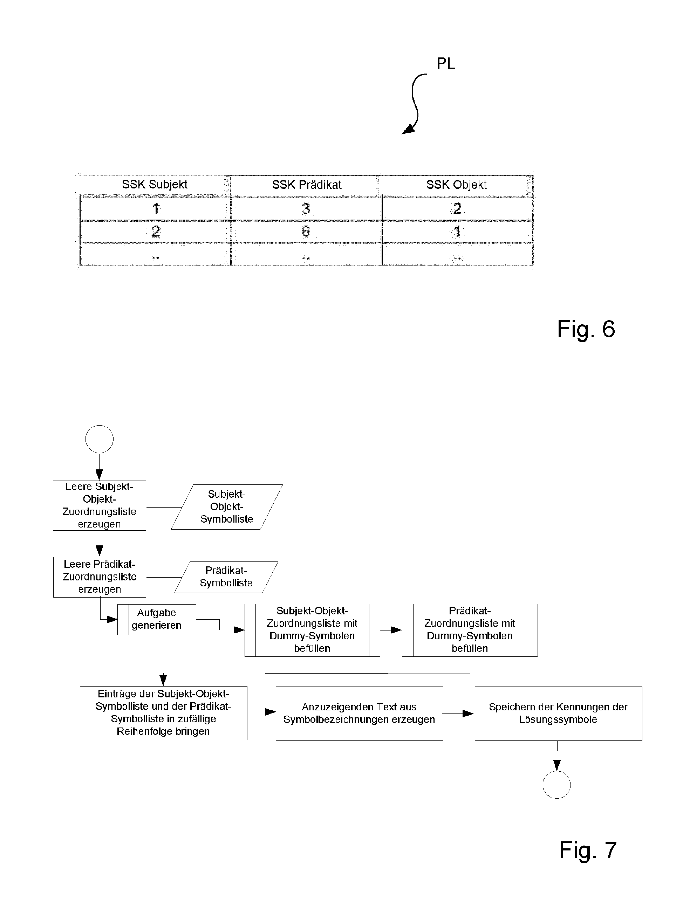

Um lediglich Phrasen 6 bzw. Sätze mit einem als semantisch sinnvoll empfundenen Phrasensinngehalt zu verwenden, ist es notwendig, dass einen sinnvollen Phrasensinngehalt aufweisende Phrasen 6 in der dritten Rechnereinheit 3 gespeichert werden, und zwar vorzugsweise in Form einer Phrasenliste PL. In Figur 6 ist beispielsweise der prinzipielle Aufbau einer derartigen Phrasenliste PL beispielhaft dargestel

In dem in Figur 6 gezeigten Ausführungsbeispiel der Phrasenliste PL werden Kombinationen aus mehreren Symbolsinnkennungen SSK aufgeführt, die jeweils eine korrekte Lösung einer aus den Phrasenteilen 6.1, 6.2, 6.3 bestehenden Phrase 6 ergeben. Hierbei ist insbesondere auch die korrekte Reihenfolge der Symbolsinnkennungen SSK maßgeblich für die korrekte Lösung der Phrase 6. Bei Verwendung von Phrasen 6 in Form eines Satzes sind beispielsweise der erste bis dritte Phrasenteil durch das Subjekt, das Prädikat und das Objekt des Satzes gebildet. Die Phrasenliste PL zeigt hierbei in einer Zeile jeweils als sinnvoll validierte "Subjekt-Prädikat-Objekt"-Kombination, und zwar in Form der dem jeweiligen Subjekt, Prädikat und Objekt zugeordneten Symbolsinnkennung SSK. In der ersten Spalte der Phrasenliste PL sind hierbei jeweils die Symbolsinnkennungen SSK für die Subjekte eines Satzes, in der zweiten Spalte die Symbolsinnkennungen SSK für die Prädikate eines Satzes und in der dritten Spalte die Symbolsinnkennungen SSK für die Objekte eines Satzes aufgelistet. Eine sinnvolle Subjekt-Prädikat-Objektkombination besteht beispielsweise aus der Kombination der Symbolsinnkennung 2, 6, 1, die beispielsweise als Phrase 6 durch die Symbolbezeichnungen SB="Sally", SB="geht zu" und SB="Bob" als Aufgabenstellung dienen kann. Somit erfolgt die Aufgabenstellung durch Auswählen einer "Subjekt-Prädikat-Objekt"-Kombination der Phrasenliste PL.

Anhand der einzelnen in der jeweiligen Zeile der Phrasenliste PL eingetragenen Symbolsinnkennungen SSK wird aus der Symbolliste SL (siehe Figur 5) eine Auswahl an Symbolbezeichnungen SB und Symbolkennungen SK getroffen. Diese Auswahl kann rein zufällig geschehen oder aber beispielsweise nach einem vorgegebenen Schema derart, dass die in der Vergangenheit am wenigstens benutzten Symbolbezeichnungen bzw. Grafikkennungen vorrangig verwendet werden, erfolgen.

Die aus der Symbolliste SL ausgewählten Symbolbezeichnungen SB bilden hierbei die einzelnen Wörter der Phrase 6, die zur Aufgabenstellung an der Anzeigeeinheit 5 der ersten Rechnereinheit 1 angezeigt werden. Die Reihenfolge, mit der die einzelnen Symbolbezeichnungen innerhalb der Phrase 6 bzw. Satzes angezeigt werden, ist durch die Anordnung der Symbolsinnkennungen SSK innerhalb einer Zeile der Phrasenliste PL bestimmt, wobei jeweils einem Phrasenteil 6.1 bis 6.3 eine Symbolsinnkennung SSK zugeordnet ist.

Anhand der in der Symbolliste SL ausgewählten Symbolkennungen SK erfolgt eine Auswahl der Symbole S aus der Liste L (siehe Figur 4). Somit ist über die Phrasenliste PL (siehe Figur 6) in Kombination mit der Symbolliste SL (siehe Figur 5) und der Liste L (siehe Figur 2) ein Lösungsraum bestehend aus einer Vielzahl von sinnvollen "Subjekt-Prädikat-Objekt"-Kombinationen vorgegeben.

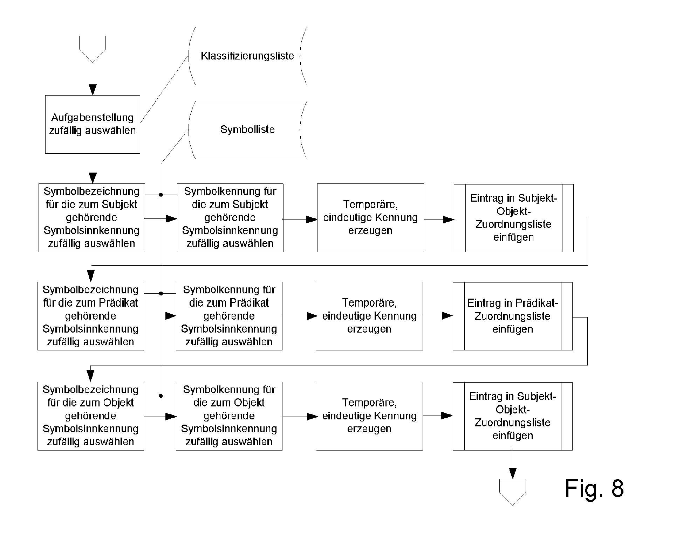

Zur Generierung einer Aufgabenstellung wird beispielsweise in der dritten Rechnereinheit 3 ein Aufgabenstellungsroutine ausgeführt, deren einzelnen Verfahrensschritte mittels der in den Figuren 7 und 8 dargestellten Ablaufdiagrammen beispielhaft beschrieben wird.

Anhand deren wird die Erzeugung einer aus einem "Subjekt", "Prädikat" und "Objekt" gebildeten Phrase 6 und zumindest eines Symbolauswahlbereiches 7, 7', 7" beschrieben, wobei zur Auswahl des "Subjekts" und des "Objekts" des die Phrase 6 bildenden Satzes ein gemeinsamer Symbolauswahlbereichs 7 und zur Auswahl des Prädikates ein weiterer Symbolauswahlbereich 7' vorgesehen sind. Der erstgenannte Symbolauswahlbereich 7, 7" wird nachfolgend als Subjekt-Objekt-Symbolauswahlbereiche und der weitere Symbolauswahlbereich 7' als Prädikat-Symbolauswahlbereich bezeichnet.

Zunächst wird durch die Aufgabenstellungsroutine eine leere Subjekt-Objekt-Zuordnungsliste und eine leere Prädikat-Zuordnungsliste erzeugt. Anschließend erfolgt die eigentliche Aufgabengenerierung gemäß dem Ablaufdiagramm in Figur 8. Dabei wird eine Aufgabenstellung durch Auswahl einer Zeile der Phrasenliste PL (siehe Figur 6) erzeugt. Anschließend erfolgt abhängig von der in der Phrasenliste PL für den ersten Phrasenteil 6.1 bzw. das Subjekt eingetragenen Symbolsinnkennung SSK anhand der Symbolliste SL eine zufällige Auswahl einer Symbolbezeichnung SB für das den ersten Phrasenteil 6.1 bzw. Subjekt des Satzes bildende Wort.

Anschließend wird eine der jeweiligen Symbolsinnkennung SSK in der Symbolliste SL zugeordnete Symbolkennung SK ausgewählt und über die Liste L das dieser Symbolkennung SK zugeordnete grafische Symbol S ermittelt. Daraufhin wird in die Subjekt-Objekt-Zuordnungsliste ein Eintrag bestehend aus zumindest dem ausgewählten Symbol S, der ausgewählten Symbolbezeichnung SB und einer dem ausgewählten Symbol S und Symbolbezeichnung SB zugeordneten temporären, innerhalb der Aufgabenstellung eindeutigen Kennung, beispielsweise gebildet durch eine laufende Nummer, erzeugt.

Danach werden über die Aufgabenstellungsroutine anhand der das Prädikat kennzeichnenden Symbolsinnkennung SSK der Phrasenliste PL aus der Prädikat-Symbolliste zufällig eine Symbolbezeichnung SB und eine Symbolkennung SK ausgewählt. Anschließend wird anhand der Symbolkennung SK aus der Liste L das der Symbolkennung SK zugeordnete Symbol S ermittelt. Ausgehend hiervon wird eine dem Prädikat zugeordnete temporäre und eindeutige Kennung innerhalb der Phrase 6 generiert. Die Symbolbezeichnung SB, das Symbol S und die Kennung werden in die Prädikat-Zuordnungsliste eingefügt. Schließlich wird analog zum Subjekt eine Auswahl einer Symbolbezeichnung SB, eines Symbols S und die Erzeugung einer eindeutigen temporären Kennung für das Objekt der Phrase 6. Die Daten werden analog zum Subjekt in der Subjekt-Objekt-Zuordnungsliste aufgenommen.

Die Subjekt-Objekt-Zuordnungsliste sowie die Prädikat-Zuordnungsliste werden zusätzlich mit sogenannten Dummy-Einträgen befüllt. Für den Fall, dass der Subjekt-Objekt-Symbolauswahlbereich 7, 7" n Symbolpositionen (n=1, 2, 3...) und der Prädikat-Symbolauswahlbereich 7' m Symbolpositionen (m=1, 2, 3...) enthält werden der Subjekt-Objekt-Zuordnungsliste n-2 zufällig aus der Symbolliste ausgewählte Symbolkennungen SK, die ein Subjekt bzw. ein Objekt kennzeichnen, und dazugehörige temporäre, eindeutige Kennungen hinzugefügt. Der Prädikat-Zuordnungsliste werden m-1 zufällig ausgewählte Symbole S, die zu Prädikaten gehören, und diese Symbole S eindeutig kennzeichnende, temporäre Kennungen hinzugefügt. Um die Eindeutigkeit der Lösung der Aufgabenstellung sicherzustellen, ist es notwendig, dass die aus der Subjekt-Objekt-Symbolliste zur Erzeugung der Dummy-Symbole zufällig ausgewählten Symbolkennungen SK eine Symbolsinnkennung SSK unterschiedlich zur Symbolsinnkennung SSK des für die Lösung der Aufgaben notwendigen Subjekt- bzw. Objektsymbols aufweisen. Gleiches gilt für die Prädikat-Symbolliste und die Auswahl der der Prädikat-Zuordnungsliste zuzuweisenden Symbole S.

Nach dem Befüllen der Zuordnungslisten mit Dummy-Symbolen werden die Subjekt-Objekt-Zuordnungsliste und die Prädikat-Zuordnungsliste bzw. deren jeweilige Einträge in eine zufällige Reihenfolge gebracht. Dadurch wird vermieden, dass ein Angreifer, der möglicherweise den Algorithmus zur Erzeugung einer Aufgabenstellung mittels der Aufgabenstellungsroutine kennt, aufgrund der Lage der Einträge in der Subjekt-Objekt-Zuordnungsliste und der Prädikat-Zuordnungsliste Rückschlüsse auf die Lösung der Aufgabenstellung ziehen kann. Nach der Durchmischung der Einträge der jeweiligen Zuordnungslisten erfolgt die Zusammensetzung der Phrase 6 aus den zur Aufgabenstellung gehörigen Symbolbezeichnungen SB und/oder durch Anzeigen von Symbolen S, deren Symbolsinngehalt mit dem Wortsinngehalt übereinstimmt.

Zuletzt wird mittels der Aufgabenstellungsroutine beispielsweise die temporären, eindeutigen Symbolsinnkennungen SSK der für die korrekte Lösung der Aufgabe notwendigen Symbole S, und zwar in der korrekten Reihenfolge, abgespeichert.

Nach der Erzeugung der Aufgabenstellung durch die Aufgabenstellungsroutine erfolgt die Übertragung der für die Durchführung des Zugriffverfahrens notwendigen Daten von der dritten Rechnereinheit 3 über das Datenkommunikationsnetzwerk 4 auf die erste Rechnereinheit 1. Hierzu wird die Phrase 6 bzw. der Satz übertragen. Zur Verbesserung des Schutzes vor maschinengenerierten Angriffen kann die Übertragung der Phrase 6 in Form eines Bildes erfolgen. Ferner werden die Subjekt-Objekt-Zuordnungsliste und die Prädikat-Zuordnungsliste an die erste Rechnereinheit 1 übertragen. Nach genannter Übertragung der Datensätze wird die Phrase 6 zusammen mit den Symbolauswahlbereichen 7, 7', 7" auf der Anzeigeeinheit 5 der ersten Rechnereinheit 1 angezeigt, um den Benutzer zur Lösung der Aufgabe durch entsprechende Benutzereingabe aufzufordern.

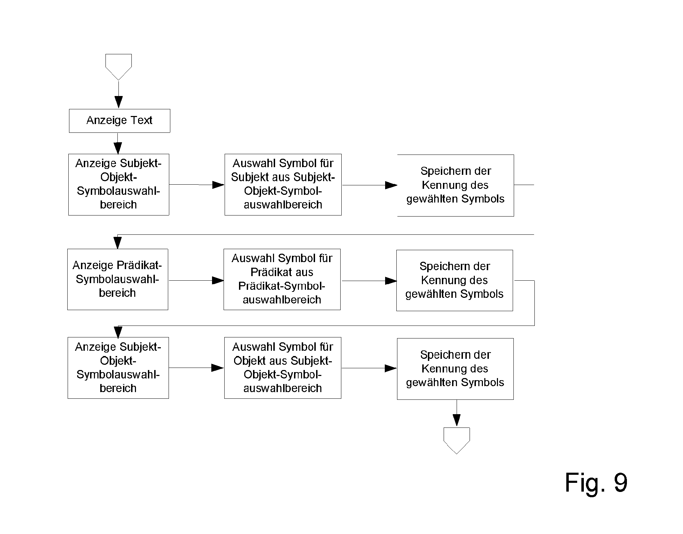

Die Durchführung der Benutzereingaben wird anhand des Ablaufdiagramms in Figur 9 näher erläutert. Durch die auf der Anzeigeeinheit 5 angezeigte Aufgabenstellung ist der Benutzer aufgefordert, aus dem Subjekt-Objekt-Symbolauswahlbereich 7 eine Auswahl für ein das Subjekt des Satzes darstellendes Symbol S zu treffen. Nach dem Selektieren eines Symbols S beispielsweise durch einen Mausklick, durch die Berührung eines berührungsempfindlichen Displays oder durch eine Tastatureingabe erfolgt die Abspeicherung der temporären Kennung des ausgewählten Symbols S. Zudem wird auf der Anzeigeeinheit 5 der Prädikat-Symbolauswahlbereich 7' zur Anzeige gebracht. Der Benutzer wird wiederum zur Auswahl eines Symbols S aus dem Prädikat-Symbolauswahlbereich 7' aufgefordert. Nach der Auswahl wird die zum ausgewählten Symbol S zugehörige Kennung temporär abgespeichert und der Subjekt-Objekt-Symbolauswahlbereich zur Auswahl eines mit dem Objekt der Phrase 6 bzw. Satzes korrelierenden Symbols S zur Anzeige gebracht. Nach der benutzerseitigen Auswahl eines Symbols S erfolgt wiederum die Speicherung der zu dem ausgewählten Symbol S zugehörigen temporären Kennung. Somit werden im gezeigten Ausführungsbeispiel durch die Benutzereingaben drei temporäre Kennungen erfasst und gespeichert. Diese Kennungen werden anschließend von der ersten Rechnereinheit 1 zur dritten Rechnereinheit 3 zur Auswertung der Benutzereingabe übertragen. Die Aufgabenstellung gilt dann als korrekt gelöst, wenn die in der dritten Rechnereinheit 3 bei Generation der Aufgabenstellung temporär abgespeicherten Kennungen mit den von der ersten Rechnereinheit 1 an die dritte Rechnereinheit 3 übertragenen, aus Benutzereingaben resultierenden Kennungen übereinstimmen.

Nach der Auswertung der Benutzereingaben erfolgt die Übertragung des Ergebnisses der Auswertung an die zweite Rechnereinheit 2, so dass bei bestandener Aufgabenstellung mit hoher Wahrscheinlichkeit davon ausgegangen werden kann, dass ein menschlicher Benutzer die Eingaben getätigt hat und damit ein Zugriff auf die geschützte Ressource gewährt werden kann.

In einem bevorzugten Ausführungsbeispiel können in den Symbolauswahlbereichen 7, 7', 7" Symbole S aufgenommen werden, die für einen menschlichen Benutzer keinen Symbolsinngehalt aufweisen. Diese können beispielsweise durch Verfremdung von ursprünglich einen Symbolsinngehalt aufweisenden Symbolen S, und zwar beispielsweise durch Störung der Bildinformationen oder durch Zersetzung oder Spiegelung einzelner Bildteile erzeugt werden. Dadurch wird die automatisierte Bewertung von Bildinhalten durch einen Angreifer erheblich erschwert.

Die Erfindung wurde voranstehend an einem Ausführungsbeispiel beschrieben. Es versteht sich, dass zahlreiche Modifikationen und Änderungen der Erfindung möglich sind, ohne dass hierdurch der Erfindungsgedanke verlassen wird.

### Bezugszeichenliste

- 1: erste Rechnereinheit
- 2, 2', 2": zweite Rechnereinheit
- 3: dritte Rechnereinheit
- 4: Datenkommunikationsnetzwerk
- 4.1: Datenkommunikationsverbindung
- 5: Anzeigeeinheit
- 6: Phrase
- 6.1: erster Phrasenteil
- 6.2: zweiter Phrasenteil
- 6.3: dritter Phrasenteil
- 7, 7', 7": Symbolauswahlbereiche

- L: Liste
- PL: Phrasenliste
- S: Symbole
- S1: erstes Symbol
- S2: zweites Symbol
- S3: drittes Symbol
- SB: Symbolbezeichnung
- SK: Symbolkennung
- SL: Symbolliste
- SSK: Symbolsinnkennung

## Patentansprüche

1. Verfahren zum Schutz vor einem maschinengenerierten Zugriff durch zumindest eine erste Rechnereinheit (1) auf eine von einer zweiten Rechnereinheit (2) zur Verfügung gestellten Ressource, bei dem zum Zugriff auf die Ressource von der ersten Rechnereinheit (1) eine Datenkommunikationsverbindung (4.1) zur zweiten Rechnereinheit (2) hergestellt wird, wobei die erste Rechnereinheit (1) über eine Anzeigeeinheit (5) und zumindest eine Eingabeeinheit verfügt,
**dadurch gekennzeichnet,**
**dass** auf der Anzeigeeinheit (5) eine Phrase (6) bestehend aus Wörtern und/oder Symbolen mit einem vorgegebenen Phrasensinngehalt angezeigt wird,
**dass** auf der Anzeigeeinheit (5) zusätzlich mehrere grafische Symbole (S) angezeigt werden, wobei zumindest ein Teil der angezeigten grafischen Symbole (S) einen durch einen menschlichen Benutzer zuordenbaren Symbolsinngehalt aufweist, dass zum Zugriff auf die zu schützende Ressource durch den Benutzer der ersten Rechnereinheit (1) grafische Symbole (S) ausgewählt und der angezeigten Phrase (6) zugeordnet werden,
**dass** die vom Benutzer ausgewählten und zugeordneten grafischen Symbole (S) dahingehend ausgewertet werden, ob eine Übereinstimmung des Symbolsinngehaltes der ausgewählten grafischen Symbole (S) mit dem Phrasensinngehalt der angezeigten Phrase (6) vorliegt und
**dass** bei übereinstimmenden Sinngehalten der Zugriff auf die zu schützende Ressource der zweiten Rechnereinheit (2) freigegeben wird.

2. Verfahren nach Anspruch 1, **dadurch gekennzeichnet, dass** eine Phrase (6) durch die Kombination mehrerer Phrasenteile (6.1, 6.2, 6.3) gebildet wird, wobei ein Phrasenteil (6.1, 6.2, 6.3) zumindest ein Wort und/oder Symbol umfasst und/oder dass zur Erzeugung des Phrasensinngehaltes die Phrasenteile (6.1, 6.2, 6.3) in einer vorgegebenen Reihenfolge nacheinander angezeigt werden.

3. Verfahren nach Anspruch 2, **dadurch gekennzeichnet, dass** durch einen Phrasenteil und/oder die Phrasenteile (6.1, 6.2, 6.3) ein Satz zumindest bestehend aus Subjekt, Prädikat und Objekt erzeugt wird.

4. Verfahren nach Anspruch 3, **dadurch gekennzeichnet, dass** durch einen Phrasenteil (6.1, 6.2, 6.3) ein Subjekt, ein Prädikat oder ein Objekt oder eine Kombination aus einem Subjekt und einem Prädikat oder eine Kombination aus einem Prädikat und einem Objekt gebildet wird und/oder dass der Phrasensinngehalt durch den Sinngehalt des Satzes erzeugt wird, wobei der Phrasensinngehalt von dem Wortsinngehalt der Wörter und/oder dem Symbolsinngehalt der Symbole sowie deren Reihenfolge abhängig ist.

5. Verfahren nach einem der Ansprüche 3 oder 4, **dadurch gekennzeichnet, dass** die Übereinstimmung des Wortsinngehaltes der Wörter und/oder des Symbolsinngehalts der Symbole der Phrase sowie deren Reihenfolge mit dem Symbolsinngehalt der ausgewählten grafischen Symbole (S) sowie deren Auswahlreihenfolge verglichen wird und abhängig davon der Zugriff auf die zu schützende Ressource der zweiten Rechnereinheit (2) freigegeben wird.

6. Verfahren nach einem der vorhergehenden Ansprüche, **dadurch gekennzeichnet, dass** den einzelnen Wörtern und/oder Symbolen einer Phrase (6) eine eindeutige Symbolsinnkennung (SSK) zugeordnet wird und/oder dass in Abhängigkeit von der jeweils angezeigten Phrase (6) zumindest ein Symbolauswahlbereich (7, 7', 7") erzeugt wird, der jeweils ein grafisches Symbol (S) mit einem Symbolsinngehalt gleich dem Wortsinngehalt eines Wortes der Phrase (6) oder gleich dem Symbolsinngehalt eines Symbols der Phrase (6) sowie weitere grafische Symbole (S), die einen anderen Symbolsinngehalt aufweisen, enthält.

7. Verfahren nach Anspruch 6, **dadurch gekennzeichnet, dass** zur Erzeugung eines grafischen Symbols der Phrase (6) und eines grafischen Symbols (S) des zumindest einen Symbolauswahlbereichs (7, 7', 7") ausschließlich grafisch unterschiedliche Symbole verwendet werden.

8. Verfahren nach einem der Ansprüche 6 oder 7, **dadurch gekennzeichnet, dass** für die einzelnen Wörter und/oder Symbole einer Phrase (6) zumindest teilweise unterschiedliche Symbolauswahlbereiche (7, 7', 7") angezeigt werden.

9. Verfahren nach einem der vorhergehenden Ansprüche, **dadurch gekennzeichnet, dass** sämtliche für das Zugriffsverfahren benötigte Daten von einer dritten Rechnereinheit (3) an die zweite Rechnereinheit (2) über eine weitere Datenkommunikationsverbindung (4.1) übertragen werden und/oder dass in der dritten Rechnereinheit (3) mehrere einen Phrasensinngehalt aufweisende Phrasen (6) gespeichert werden.

10. Verfahren nach Anspruch 9, **dadurch gekennzeichnet, dass** in der dritten Rechnereinheit (3) zumindest eine Symbolliste (SL) gespeichert wird, in der den jeweiligen Symbolsinnkennungen (SKK) jeweils zumindest ein grafisches Symbol (S) und zumindest ein Wort zugeordnet sind, wobei der Symbolsinngehalt des grafischen Symbols (S) gleich dem Wortsinngehalt des Wortes ist.

11. Verfahren nach Anspruch 10, **dadurch gekennzeichnet, dass** die einen Phrasensinngehalt aufweisenden Phrasen (6) in einer Phrasenliste (PL) durch die Zuordnung und Gruppierung von mehreren Symbolsinnkennungen (SSK) gespeichert werden.

12. Verfahren nach Anspruch 11, **dadurch gekennzeichnet, dass** die anzuzeigende Phrase (6) durch Auslesen der dieser Phrase (6) zugewiesenen Symbolsinnkennungen (SSK) aus der Phrasenliste (PL), dem Auswählen jeweils eines Wortes und/oder Symbols zu jeder Symbolsinnkennung (SSK) gemäß der Symbolliste (SL) und der Kombination der Wörter und/oder Symbole zu einer Phrase (6) gebildet wird.

13. Verfahren nach Anspruch 11 oder 12, **dadurch gekennzeichnet, dass** den Wörtern und/oder Symbolen der angezeigten Phrase (6) eindeutige Kennungen zugeordnet werden, die zumindest teilweise temporär abgespeichert werden.

14. Verfahren nach Anspruch 13, **dadurch gekennzeichnet, dass** die Überprüfung der Richtigkeit der Auswahl der grafischen Symbole (S) aus dem zumindest einen Symbolauswahlbereich (7, 7', 7") durch einen Vergleich von Kennungen der ausgewählten Wörter und/oder Symbole mit den temporär abgespeicherten Kennungen erfolgt.

15. Verfahren nach einem der vorhergehenden Ansprüche, **dadurch gekennzeichnet, dass** die Symbole (S) zumindest teilweise durch Werbeträger, insbesondere interaktive Werbeträger gebildet werden.
